Europäisches Patentamt

European Patent Office

Office européen des brevets

(19)

(11) **EP 0 762 101 A1**

(12) **EUROPÄISCHE PATENTANMELDUNG**

(43) Veröffentlichungstag:
**12.03.1997 Patentblatt 1997/11**

(51) Int. Cl.⁶: **G01M 15/00**, G01L 23/22,
G01L 3/10

(21) Anmeldenummer: **96111735.5**

(22) Anmeldetag: **20.07.1996**

(84) Benannte Vertragsstaaten:
**AT CH DE DK ES FR GB IT LI NL SE**

(30) Priorität: **28.08.1995 AT 1444/95**

(71) Anmelder: **JENBACHER ENERGIESYSTEME AG**
**A-6200 Jenbach (AT)**

(72) Erfinder:
• **Prockstaller, Franz**
  **6200 Jenbach (AT)**
• **Fahringer, Albert**
  **6345 Kössen (AT)**

(74) Vertreter: **Torggler, Paul, Dr. et al**
**Wilhelm-Greil-Strasse 16**
**6020 Innsbruck (AT)**

(54) **Erkennen irregulärer Betriebszustände eines Verbrennungsmotors durch drehzahlabhängige Torsionsschwingungen der Kurbelwelle**

(57)     Einrichtung zum Erkennen von irregulären Betriebszuständen eines Verbrennungsmotors, gekennzeichnet durch eine Einrichtung zum mehrmaligen Erfassen des Verdrehwinkels (d alpha) der Kurbelwelle (4) pro Umdrehung, wobei diese Einrichtung - wie an sich bekannt - ein dem jeweiligen Verdrehwinkel (d alpha) entsprechendes elektrisches Torsionssignal abgibt, und weiters gekennzeichnet durch eine Auswerteinrichung (6) zum Auswerten der Amplitude zumindest einer Torsionssignal-Schwingungskomponente mit einer der Drehzahl (n) des Verbrennungsmotors oder einem Vielfachen davon entsprechenden Frequenz.

Der Verdrehwinkel der Kurbelwelle (1) wird über die Phase zweier Zahnscheiben (2) erfaßt und frequenzmäßig mit Bandpaßnachlauffiltern (7) von der 0,5ten bis zur 4ten Harmonischen der Drehzahl ausgewertet. Bei 1500 U/min von 12,5 bis 100 Hz. Auch FFT oder Hochpaß zur Anzeige, Regelung und Notabschaltung.

Fig. 2

Fig. 1

## Beschreibung

Die Erfindung betrifft eine Einrichtung zum Erkennen von irregulären Betriebszuständen eines Verbrennungsmotors.

Für Hubkolben-Verbrennungsmotoren kann es zu einem Problem werden, wenn es an der Kurbelwelle zu unzulässigen Schwingungsamplituden kommt. Besonders kritisch ist hierbei ein Resonanzfall. Bei solchen irregulären Betriebszuständen des Motors kann es schlimmstenfalls zu einem Kurbelwellenbruch kommen. Auch Zündaussetzer des Verbrennungsmotors (kurz: Motor) können solche irregulären Betriebszustände eines Motors darstellen.

Um irreguläre Betriebszustände eines Motors zuverlässig erfassen zu können, sieht die Erfindung eine Einrichtung zum mehrmaligen Erfassen des Verdrehwinkels der Kurbelwelle pro Umdrehung vor, wobei diese Einrichtung wie an sich bekannt, ein dem jeweiligen Verdrehwinkel entsprechendes elektrisches Torsionssignal abgibt. Weiters ist die erfindungsgemäße Einrichtung gekennzeichnet durch eine Auswerteinrichtung zum Auswerten der Amplitude zumindest einer Torsionssignal-Schwingungskomponente mit einer der Drehzahl des Verbrennungsmotors oder einem Vielfachen davon entsprechenden Frequenz.

In der DE 31 37 220 A1 ist zwar eine Vorrichtung beschrieben, bei der die Verdrehung (Torsion) der Kurbelwelle erfaßt wird. Ziel dieser Einrichtung ist es jedoch nur, ein Gleichstromsignal zu liefern, dessen Größe als Maß für das Drehmoment dienen kann. Vorzugsweise wird das Drehmoment nur bei jeder zweiten Umdrehung der Kurbelwelle gemessen.

Um auf irreguläre Betriebszustände des Motors hinweisende Schwingungen der Kurbelwelle rechtzeitig festzustellen, wurde bisher lediglich am dämpferseitigen Ende der Kurbelwelle eine Schwingungsmessung vorgenommen, welche jedoch weiter abtriebsseitig verursachte Schwingungen nicht zuverlässig erfaßt. Die Erfindung geht von der Überlegung aus, daß mit der bekannten Einrichtung nach DE 31 37 220 A1 Torsionsschwingungen der Kurbelwelle über deren ganze Länge erfaßt werden können, wenn man diese Einrichtung nicht wie bisher dazu verwendet, das unter Umständen über mehrere Umdrehungen gemittelte maximale Drehmoment auszuwerten, sondern das Torsionssignal, welches den Verdrehwinkel zwischen den beiden Enden der Kurbelwelle angibt, genauer auf seinen Schwingungsgehalt analysiert. Erfindungsgemäß interessiert also nicht der absolute mittlere Wert der Verdrehung der Kurbelwelle, welcher gemäß der DE 31 37 320 ein Maß für das Drehmoment ist, sondern die im Torsionssignal manifestierten Schwingungen des Verdrehwinkels im Laufe der Umdrehungen.

Es hat sich herausgestellt, daß für das Erkennen von irregulären Betriebszuständen nicht nur die Schwingungskomponente des Torsionssignals mit jener Frequenz, die der der Drehzahl des Motors entspricht (Frequenz $f = n[1/min]/60$ ; z.B. $n = 1500$ 1/min bedeutet eine Frequenz von 25Hz), sondern auch Schwingungskomponenten mit einer vielfachen dieser Drehzahlfrequenz bedeuten. Dabei werden allgemein unter einem Vielfachen nicht nur ganzzahlige Vielfache verstanden. Beispielsweise ist bei einem 4-Takt-Motor, der ja nur bei jeder zweiten Kurbelwellenumdrehung zündet, auch die Schwingungskomponente im Torsionssignal mit der halben Drehzahl-Frequenz des Motors von Interesse. Schwingungskomponenten mit einem ganzzahligen Vielfachen werden üblicherweise auch als Oberschwingungen oder Ordnungen bezeichnet. Man erhält mehrmals pro Umdrehung (oder ständig) ein Meßergebnis und kann somit alle für den irregulären Motorbetrieb relevanten Oberschwingungen der Kurbelwellentorsionsschwingung kontrollieren. Wird dabei ein Trend in Richtung irregulärer Motorbetrieb festgestellt, können beispielsweise vorzeitig entsprechende Gegenmaßnahmen wie eine Drehzahländerung oder eine Leistungsabsenkung getroffen werden. Falls in der Folge ein zulässiger Grenzwert überschritten wird, kann der Motor mittels Schnellstop auch vor einem etwaigen Schaden bewahrt werden.

Weitere Vorteile und Einzelheiten der Erfindungen werden anhand der nachfolgenden Figurenbeschreibung näher erläutert.

Es zeigt:

Fig. 1 ein Ausführungsbeispiel einer Einrichtung zum Erfassen des Verdrehwinkels und zur Abgabe eines elektronischen Torsionssignals;
Fig. 2 ein erstes Ausführungsbeispiel einer erfindungsgemäßen Auswerteinrichtung;
Fig. 3 und 4 weitere Ausführungsbeispiele von erfindungsgemäßen Auswerteinrichtungen.

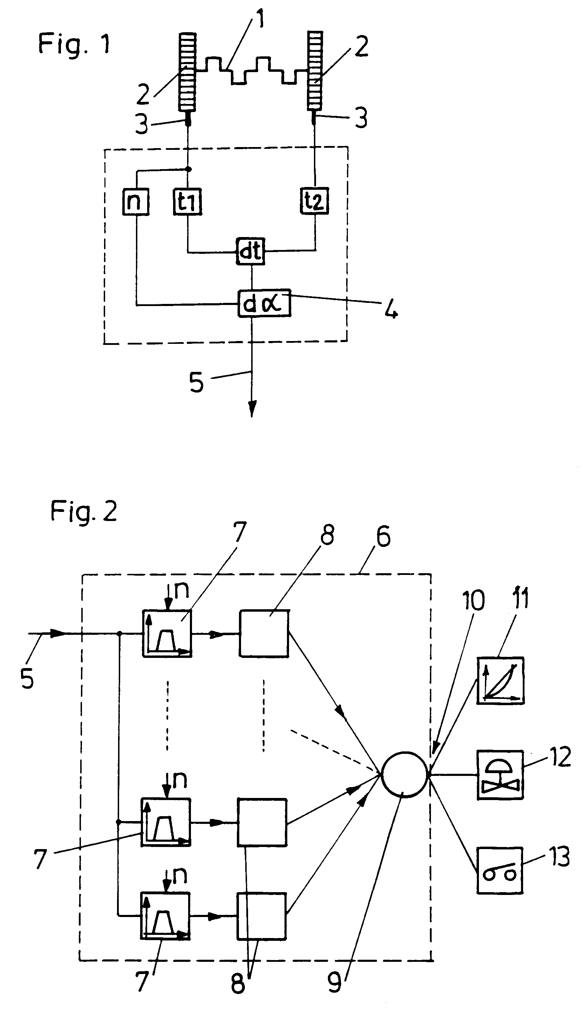

Bei dem in Fig. 1 dargestellten Ausführungsbeispiel ist an beiden Enden der Kurbelwelle 1 jeweils eine Zahnscheibe 2 mit identischer Zähnezahl (beispielsweise 30 Zähne) befestigt. Eine der beiden Zahnscheiben kann durch den meist ohnehin vorhandenen Starterkranz gebildet sein. Vor jeder Zahnscheibe 2 wird ein Impulsgeber ("pick-up") wie beispielsweise ein Halleffektgeber, ein induktiver Geber oder ein kapazitiver Geber etc. angebracht. Es ist nicht erforderlich, die Impulsgeberpositionen zueinander auszurichten, da der statische Anteil des Verdrehwinkels erfindungsgemäß gerade nicht interessiert und in der nachfolgenden Auswertschaltung, beispielsweise durch Hochpaßfilterung ohnehin eliminiert wird.

Bei sich drehender Kurbelwelle ergibt sich eine Zeitdifferenz dt zwischen den beiden Zeitimpulsen t1 und t2 von den beiden Impulsgebern 3. Die Zeitdifferenz dt hängt einerseits von der Drehzahl n und andererseits von der Verdrehung (Torsion) der Kurbelwelle 1 ab. Eine elektronische Recheneinheit (beispielsweise ein Mikroprozessor) bestimmt anhand der gemessenen Drehzahl n und der gemessenen Zeitdifferenz dt der Impulse der Impulsgeber, die Winkeldifferenz d alpha der beiden Zahnscheiben 2 und damit die Verdrehung bzw. Torsion der Kurbelwelle 1. Bei entsprechender Zähnezahl erhält man ausreichend viele Meßergebnisse pro Umdrehung, um alle relevanten Ordnungen der Kurbelwellendrehschwingungen auswerten zu können. Wird z.B. ein Zahnkranz mit 30 Zähnen eingesetzt, so wird bei Berechnung mit sechs Schützstellen immer noch die fünfte Ordnung erfaßt. Dies ist in der Regel ausreichend, um einen irregulären Motorbetrieb erkennen zu können. Das elektronische Torsionssignal wird auf der Leitung 5 ausgegeben. Wie im folgenden noch näher beschrieben werden wird, zieht man nun das so gewonnene Torsionssignal zum Erkennen von Veränderungen im Schwingungsverhalten und gegebenenfalls zum darauf folgenden Einleiten von entgegenwirkenden Maßnahmen heran. Das Torsionssignal kann auch dahingehend gezielt verarbeitet werden, Trends im Schwingungsverhalten zu erkennen und daraus Aussagen über den Wertungszustand des Motors zu machen. Wie bereits erwähnt, werden Frequenzen, die wesentlich unterhalb der halben Drehzahl der Kurbelwelle liegen, ausgefiltert und damit der Gleichanteil eliminiert, um die Impulsgeberpositionen zueinander nicht ausrichten zu müssen.

Bei der in Fig. 2 dargestellten Auswerteinrichtung 6 wird über die Leitung 5 das gemäß Fig. 1 gewonnene Torsionssignal zugeführt. Das Torsionssignal gelangt dann in mehrere parallele Bandpaßfilter 7, die unterschiedliche mittlere Durchlaßfrequenzen aufweisen. Der in Fig. 2 oberste Bandpaßfilter 7 weist eine mittlere Durchlaßfrequenz auf, die der halben Drehzahlfrequenz entspricht (0,5.Ordnung, bei 1500 U/min entspricht dies 12,5 Hz). Bei dem als nächstes darunterliegenden durch Punkte angedeuteten Bandpaßfilter liegt die mittlere Durchlaßfrequenz genau bei der Drehzahlfrequenz (beispielsweise bei 25 Hz) etc. Schließlich liegt beim dargestellten Ausführungsbeispiel beim untersten Bandpaßfilter gemäß Fig. 2 die mittlere Durchlaßfrequenz des Bandpaßfilters 7 dort bei der vierfachen Drehzahlfrequenz (also beispielsweise bei 100 Hz). Es werden also bei dem Ausführungsbeispiel gemäß Fig. 2 Torsionssignal-Schwingungskomponenten von der 0,5. bis zur 4.Ordnung in ihrer Amplitude ausgewertet. Bei einem 2-Takt-Motor, bei dem pro Kurbelwellenumdrehung einmal gezündet wird, ist die Auswertung der 0,5.Ordnung nicht nötig.

Allgemein ist es günstig, bei einem mehrzylindrigen Motor eine Auswertung der Schwingungen höherer Ordnungen bis hinauf zur sogenannten Hauptharmonischen durchzuführen. Diese Hauptharmonische entspricht jener Schwingung, die von allen Zylindern gemeinsam angelenkt wird. Die Frequenz $f_H$ der Hauptharmonischen ergibt sich zu $f_H \cdot n/(a \cdot b \cdot 60)$, wobei Z die Zylinderzahl und n die Drehzahl des Motors ist. Die Konstante a hat bei einem regelmäßigen V-Motor (60° Zylinderwinkel) den Wert 1, ansonsten den Wert 2. Die Konstante b hat bei einem Zweitaktmotor den Wert 1, bei einem Viertaktmotor den Wert 2.

Die Bandpaßfilter 7 sind als Nachlauffilter ausgebildet, deren mittlere Durchlaßfrequenz in Abhängigkeit von einem dem jeweiligen Nachlauffilter zugeführten der Drehzahl n des Motors entsprechenden Signal automatisch variiert.

Den einzelnen Bandpaßfiltern 7 können Mittelungsstufen 8 nachgeschaltet sein. Die vorteilhaft gemittelten Amplitudensignale der einzelnen Torsionssignal-Schwingungsordnungen werden in der Folge einem logischen oder -schaltkreis 9 zugeführt, der von den zugeführten Amplitudensignalen das größte Amplitudensignal am Ausgang 10 der Auswerteinrichtung 6 bereitstellt. Dieses ein Maß für den Schwingungsgehalt in Torsionsgehalt darstellende Ausgangssignal kann nun auf mehrfache Weise verwendet werden.

Beispielsweise ist es möglich, über einen Drucker oder einen Bildschirm 11 eine graphische Darstellung über einen gewissen Zeitraum zu erzielen, um damit für eine Bedienungsperson Trends im Schwingungsverhalten der Kurbelwelle feststellen zu können und damit bereits vor dem Eintreten von irregulären Betriebszuständen reagieren zu können. Grundsätzlich können anstelle einer Bedienungsperson auch spezielle Rechenalgorithmen solche Trends bewerten und entsprechend automatisch reagieren.

Auch ist es möglich, dß Ausgangssignal vom Ausgang 10 für eine Motorregelung heranzuziehen, um den irregulären Betriebszuständen entgegenzuwirken. Die Motorregelung 12 kann beispielsweise die Leistung oder die Drehzahl des Motors in Abhängigkeit vom Ausgangssignal am Ausgang 10 der Auswerteinrichtung 6 regeln.

Weiters ist es beispielsweise möglich, an den Ausgang 10 der Auswerteinrichtung 6 eine Notabschaltung 13 anzuschließen, die den Motor abschaltet, sobald das Ausgangssignal am Ausgang 10 der Auswerteinrichtung 6 einen vorzugsweise einstellbaren Wert überschreitet.

Grundsätzlich wäre es auch möglich, anstelle des Oder-Schaltkreises 9 einen Und-Schaltkreis zu verwenden, der die Summe aller Amplituden der ausgewerteten Ordnungen am Ausgang 10 der Auswerteinrichtung 6 bereitstellt.

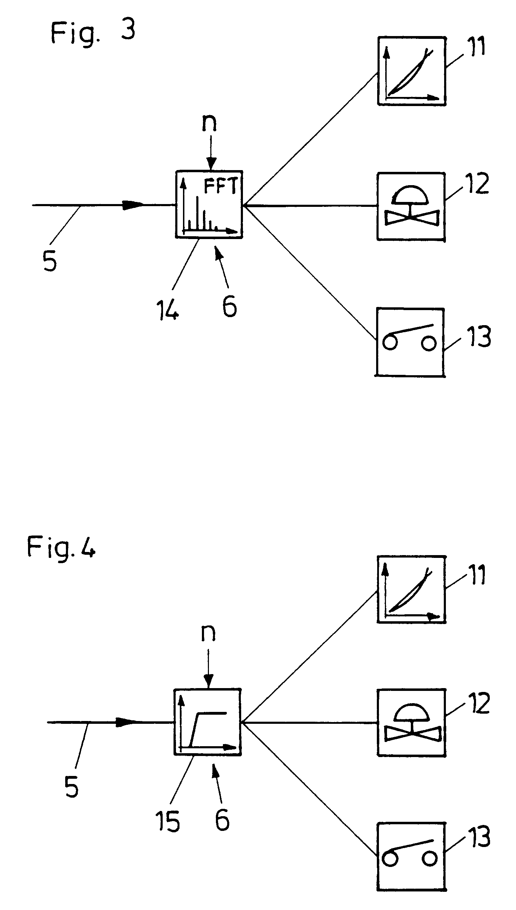

Bei dem in Fig. 3 dargestellten Ausführungsbeispiel weist die Auswerteinrichtung 6 eine Fouriertransformationsstufe 14 auf, die aus dem über die Leitung 5 zugeführten Torsionssignal die Amplituden der einzelnen Torsionssignal-Schwingungsordnungen ausgibt. Die Ausgabe kann beispielsweise seriel in digitaler Form oder analog auf parallelen Leitungen folgen, wobei auf jeder Leitung die Amplitude einer bestimmten Schwingungsordnung ansteht. Der Ausgang der Fouriertransformationsstufe 14 kann wiederum an eine Anzeigevorrichtung 11, eine Regelung 12 oder eine Notabschaltung 13 angeschlossen sein.

Bei dem in Fig. 4 dargestellten Ausführungsbeispiel weist die Auswerteinrichtung 6 ein Hochpaßfilter 15 auf, dessen Grenzfrequenz größer oder gleich der halben Drehzahlfrequenz des Motors ist. Auch dieses Hochpaßfilter kann als Nachlauffilter ausgebildet sein, der die Grenzfrequenz automatisch in Abhängigkeit von der zugeführten Drehzahl n variiert. Bei dem Ausführungsbeispiel gemäß Fig. 4 besteht das Ausgangssignal aus der Summe aller Schwingungen ab der 0,5.Ordnung.

Es können natürlich auch einzelne als markant bekannte Oberschwingungen alleine (z.B. bei einem 12-Zylinder-4-Takt-V-Motor mit unregelmäßigem Zündabstand die 3.Ordnung) für die Steuerung und Regelung des Motors verwendet werden.

## Patentansprüche

1. Einrichtung zum Erkennen von irregulären Betriebszuständen eines Verbrennungsmotors, gekennzeichnet durch eine Einrichtung zum mehrmaligen Erfassen des Verdrehwinkels (d alpha) der Kurbelwelle (4) pro Umdrehung, wobei diese Einrichtung - wie an sich bekannt - ein dem jeweiligen Verdrehwinkel (d alpha) entsprechendes elektrisches Torsionssignal abgibt, und weiters gekennzeichnet durch eine Auswerteinrichung (6) zum Auswerten der Amplitude zumindest einer Torsionssignal-Schwingungskomponente mit einer der Drehzahl (n) des Verbrennungsmotors oder einem Vielfachen davon entsprechenden Frequenz.

2. Einrichtung nach Anspruch 1 für einen 4-Takt-Motor, dadurch gekennzeichnet, daß die Auswerteinrichtung (6) zum Auswerten zumindest einer Torsionssignal-Schwingungskomponente mit einer der halben Drehzahl (n), genau der Drehzahl (n) oder einem ganzzahlingen Vielfachen der Drehzahl (n) entsprechenden Frequenz ausgebildet ist.

3. Einrichtung nach Anspruch 1 für einen 2-Takt-Motor, dadurch gekennzeichnet, daß die Auswerteinrichtung (6) zum Auswerten zumindest einer Torsionssignal-Schwingungskomponente mit einer der Drehzahl (n) oder einem ganzzahligen Vielfachen davon entsprechenden Frequenz ausgebildet ist.

4. Einrichtung nach einem der Ansprüche 1 bis 3, dadurch gekennzeichnet, daß die Auswerteinrichtung zum Auswerten von ganzzahligen Vielfachen der Drehzahl-Frequenz im Torsionssignal bis hinauf zur Hauptharmonischen ausgebildet ist.

5. Einrichtung nach einem der Ansprüche 1 bis 4, dadurch gekennzeichnet, daß die Auswerteinrichtung (6) mindestens ein Bandpaßfilter (7) umfaßt, durch das das Torsionssignal geführt wird.

6. Einrichtung nach Anspruch 5, dadurch gekennzeichnet, daß das(die) Bandpaßfilter (7) als Nachlauffilter ausgebildet ist(sind), dessen(deren) mittlere Durchlaßfrequenz in Abhängigkeit von einem dem Nachlauffilter (7) zugeführten, der Drehzahl (n) des Motors entsprechenden Signal automatisch variiert.

7. Einrichtung nach Anspruch 5 oder Anspruch 6, dadurch gekennzeichnet, daß die mittlere Durchlaßfrequenz des(der) Bandpaßfilter(s) (7) genau der Drehzahl-Frequenz des Motors oder einem ganzzahligen oder halbzahligen Vielfachen davon entspricht.

8. Einrichtung nach einem der Ansprüche 5 bis 7, dadurch gekennzeichnet, daß mehrere Bandpaßfilter (7) unterschiedlicher Durchlaßfrequenz parallel geschaltet sind.

9. Einrichtung nach einem der Ansprüche 1 bis 8, gekennzeichnet durch einen logischen Oder-Schaltkreis (10), der von zugeführten Amplitudensignalen der einzelnen Torsionssignal-Schwingungsordnungen das größte Amplitudensignal am Ausgang (10) bereitstellt.

10. Einrichtung nach einem der Ansprüche 1 bis 9, dadurch gekennzeichnet, daß die Amplituden der Torsionssignal-Schwingung(en) in einer Mittelungsstufe (8) gemittelt werden.

11. Einrichtung nach einem der Ansprüche 1 bis 10, dadurch gekennzeichnet, daß die Auswerteinrichtung (6) eine Fouriertransformationsstufe (14) aufweist, die die Amplituden der einzelnen Torsionssignal-Schwingungsordnungen ausgibt.

12. Einrichtung nach einem der Ansprüche 1 bis 11, dadurch gekennzeichnet, daß die Auswerteinrichtung (6) ein Hochpaßfilter (15) aufweist, dessen Grenzfrequenz größer oder gleich der halben Drehzahl-Frequenz des Motors ist.

13. Einrichtung nach einem der Ansprüche 1 bis 12, dadurch gekennzeichnet, daß der Ausgang (10) der Auswerteinrichtung (6) mit einer Anzeigevorrichtung, beispielsweise einem Bildschirm (11) und/oder einem Drucker verbunden ist.

14. Einrichtung nach einem der Ansprüche 1 bis 13, dadurch gekennzeichnet, daß der Ausgang (10) der Auswerteinrichtung (6) mit einer Motorregelung (12) verbunden ist, welche in Abhängigkeit vom Ausgangssignal am Ausgang (10) Motorparameter, wie beispielsweise die Leistung oder die Drehzahl, regelt.

15. Einrichtung nach einem der Ansprüche 1 bis 14, gekennzeichnet durch an den Ausgang (10) der Auswerteinrichtung (6) angeschlossene Notabschaltung (13) zum Abschalten des Motors sobald das Ausgangssignal am Ausgang (10) der Auswerteinrichtung einen - vorzugsweise einstellbaren - Wert überschreitet.

16. Einrichtung nach einem der Ansprüche 1 bis 15, dadurch gekennzeichnet, daß die Einrichtung zum Erfassen des Verdrehwinkels (d alpha) der Kurbelwelle (1) - wie an sich bekannt - an jedem Ende der Kurbelwelle (1) eine Zahnscheibe (2) aufweist, wobei jeder Zahnscheibe (2) ein Impulsgeber (3) zugeordnet ist.

17. Einrichtung nach Anspruch 16, gekennzeichnet durch eine Recheneinheit (4), die in Abhängigkeit von der Drehzahl (n) des Motors und der Zeitdifferenz (dt) zwischen den Impulsen der Impulsgeber (3) das Torsionssignal bereitstellt.

Fig. 1

Fig. 2

Fig. 3

Fig. 4

EP 0 762 101 A1

<table>
<tr><td colspan="2"></td><td>Europäisches<br>Patentamt</td><td>EUROPÄISCHER RECHERCHENBERICHT</td><td>Nummer der Anmeldung<br>EP 96 11 1735</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE-A-29 03 788 (BOSCH) 14.August 1980<br>* Seite 6, Absatz 2; Abbildung 2 *<br>--- | 1 | G01M15/00<br>G01L23/22<br>G01L3/10 |
| A | DE-A-26 58 614 (NISSAN) 7.Juli 1977<br>* Abbildungen 4,5 *<br>--- | 1 | |
| A | US-A-4 249 416 (KOTWICKI) 10.Februar 1981<br>* Abbildungen 1,2 *<br>--- | | |
| A | US-A-4 188 920 (BIANCHI ET AL.) 19.Februar 1980<br>* Spalte 4, Zeile 16 - Zeile 30; Abbildung 3 *<br>--- | | |
| A | PATENT ABSTRACTS OF JAPAN<br>vol. 017, no. 322 (M-1432), 18.Juni 1993<br>& JP-A-05 033751 (MAZDA MOTOR CORP),<br>9.Februar 1993,<br>* Zusammenfassung *<br>--- | | |
| A | PATENT ABSTRACTS OF JAPAN<br>vol. 017, no. 149 (P-1509), 24.März 1993<br>& JP-A-04 319629 (MITSUBISHI HEAVY IND LTD;OTHERS: 01), 10.November 1992,<br>* Zusammenfassung *<br>----- | | RECHERCHIERTE SACHGEBIETE (Int.Cl.6)<br><br>G01M<br>G01L |

Der vorliegende Recherchenbericht wurde für alle Patentansprüche erstellt

| Recherchenort | Abschlußdatum der Recherche | Prüfer |
|---|---|---|
| MÜNCHEN | 13.November 1996 | Mielke, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes Dokument

EPO FORM 1503 03.82 (P04C03)